# EUROPÄISCHE PATENTSCHRIFT

(11) **EP 3 237 086 B1**
(45) Veröffentlichungstag und Bekanntmachung des Hinweises auf die Patenterteilung: **20.02.2019**
(21) Anmeldenummer: 15816774.2
(22) Anmeldetag: 21.12.2015
(51) Int. Cl.: B01D 21/24, E03F 3/04

(54) **ZULAUFMODUL FÜR SEDIMENTATIONSANLAGE**
INLET MODULE FOR A SEDIMENTATION SYSTEM
MODULE D'ALIMENTATION POUR INSTALLATION DE SÉDIMENTATION

(30) Priorität: 22.12.2014 DE 102014226800
(43) Veröffentlichungstag der Anmeldung: 01.11.2017
(73) Patentinhaber: Wavin B.V., 8011 CW Zwolle (NL)
(72) Erfinder: DETERMANN, Matthias, 49716 Meppen (DE); GUETTOUCHE, Ali, 49733 Haren (DE); BRÜMMER, Günter, 49740 Haselünne (DE)
(74) Vertreter: Hoffmann Eitle
(86) Internationale Anmeldenummer: PCT/EP2015/080792
(87) Internationale Veröffentlichungsnummer: WO 2016/102466

(56) Entgegenhaltungen:
- WO-A1-98/38134
- WO-A1-2005/085696
- US-A- 2 795 240
- US-B1- 7 459 090

## Beschreibung

### Technisches Gebiet

Die Erfindung betrifft eine Sedimentationsanlage sowie ein Zulaufmodul für eine Sedimentationsanlage.

Sedimentationsanlagen sind zum Absetzen von in Flüssigkeiten enthaltenen ungelösten Schmutzfrachten unterschiedlicher Dichte ausgestaltet. Entscheidend für das Verhalten der Partikel innerhalb der Sedimentationsanlage ist neben der Dichte auch die Größe der Partikel.

Sedimentationsanlagen haben die Form eines Klärbeckens oder bestehen aus einer Rohrstrecke. Sie sind z.B. zwischen einem Regenwasserablauf von Fahrbahnoberflächen und einer Versickerungsanlage anschließbar und dienen dann dem Schutz der Versickerungsanlage vor Verschmutzung und Verstopfung durch die absetzbaren Stoffe beim Einleiten von Niederschlagswasser.

### Stand der Technik

Aus der DE 20 2005 014 237 U1 ist eine gattungsgemäße Sedimentationsanlage bekannt. Sie umfasst einen vorzugsweise unterirdisch zu verlegenden Sedimentationskörper, der einen Absetzraum definiert; zumindest eine Zulaufeinrichtung, durch welche eine Flüssigkeit in den Absetzraum einleitbar ist; und zumindest eine Ablaufeinrichtung, durch welche die Flüssigkeit wieder aus dem Absetzraum ausleitbar ist. Die Sedimentationsanlage kann modular aufgebaut und dann in ein Zulaufmodul, ggf. zumindest ein Streckenmodul und ein Ablaufmodul unterteilt sein, wobei das Zulaufmodul die Zulaufeinrichtung umfasst und das Ablaufmodul die Ablaufeinrichtung.

Aus WO-A1-98/38134 ist ein geschlossenes, chemisch unterstütztes Abwasserbehandlungssystem bekannt, in welchem das Wasser durch ein Ablagerungsrohr in einen Klärtank fließt. Beabstandet von dem dem Klärtank abgewandten, verschlossenen Ende des Ablagerungsrohrs ist ein U-förmiger Zulauf angebracht, durch den das Wasser möglichst sanft und ohne Turbulenzen in das Ablagerungsrohr eingeleitet werden soll und in Richtung des Klärtanks fließt.

Die Veröffentlichungen WO-A1-2005/085696, US 2,795,240 und US-B1-7,459,090 gehören ebenfalls zum Stand der Technik.

### Darstellung der Erfindung

Der vorliegenden Erfindung liegt die Aufgabe zugrunde, eine Sedimentationsanlage sowie ein Zulaufmodul für eine Sedimentationsanlage mit verbesserter Reinigungsleistung zu schaffen.

Diese Aufgabe wird zum Einen mit einem Zulaufmodul gemäß Patentanspruch 1 gelöst.

Dieses Zulaufmodul umfasst ein Rohrstück und zumindest eine Zulaufeinrichtung, durch welche eine Flüssigkeit in das Rohrstück einleitbar ist. Das Rohrstück hat in axialer Richtung ein erstes, verschließbares Ende, das von der Zulaufeinrichtung in axialer Richtung um eine Versatzlänge beabstandet ist, und ein zweites, offenes Ende, das zum Anschluss an ein weiteres Modul der Sedimentationsanlange ausgestaltet ist. Dabei kann es sich insbesondere um ein Streckenmodul oder ein Ablaufmodul der Sedimentationsanlage handeln. Diese Versatzlänge ist bei herkömmlichen Sedimentationsanlagen recht kurz. Erfindungsgemäß ist sie dagegen derart bemessen, dass zwischen der Zulaufeinrichtung und dem verschließbaren axialen Ende des Rohrstücks des Zulaufmoduls ein Umlaufraum gebildet ist, in dem die durch die Zulaufeinrichtung in das Zulaufmodul eingeleitete Flüssigkeit umlaufen kann, bevor sie in Richtung des offenen Endes des Rohrstücks des Zulaufmoduls weitergeleitet wird.

Die Zulaufeinrichtung weist einen Zulaufstutzen auf, der in das Innere des Rohrstücks des Zulaufmoduls hineinragt. Das in das Innere des Rohrstücks hineinragende Ende des Zulaufstutzens ist unter einem Winkel gegenüber der Längsachse des Zulaufstutzens angeschrägt, so dass sich der Zulaufstutzen zum Umlaufraum hin öffnet. Aufgrund der Anschrägung ist die Zulauföffnung nicht nur nach unten in Richtung des Bodens des Rohrstücks, sondern auch zu einem gewissen Grad zum ersten, verschließbaren Ende des Rohrstücks hin gerichtet.

Die durch die Zulaufeinrichtung einströmende Flüssigkeit, z.B. Regenwasser, fließt daher zunächst in den Umlaufraum, der in dem erfindungsgemäße Zulaufmodul im Bereich zwischen dem Zulaufstutzen und dem verschlossenen Ende des Rohrstücks ausgebildet ist. Der Umlaufraum ist dadurch gebildet, dass die Versatzlänge, um die das erste, verschließbares Ende des Rohrstücks von der Zulaufeinrichtung in axialer Richtung beabstandet ist, entsprechend bemessen ist. Das erste, verschließbare Ende des Rohrstücks des Zulaufmoduls schließt die Sedimentationsanlage im montierten bzw. verlegten Zustand in axialer Richtung ab.

Am verschlossenen Ende des Rohrstücks wird die Flüssigkeit umgelenkt und strömt erst dann in der entgegengesetzten Richtung, d.h. durch das freie Ende des Zulaufmoduls und im Einbauzustand weiter in Richtung eines Ablaufmoduls mit einer Ablaufeinrichtung.

Durch diese der eigentlichen Strömungsrichtung vom Zulauf zum Ablauf zunächst entgegenlaufende und umlaufende Bewegung der Flüssigkeit im Umlaufraum verlängert sich der Fließweg und somit die Durchlaufzeit der Flüssigkeit verglichen mit einem Zulaufmodul, in dem die Flüssigkeit von der Zulaufeinrichtung direkt in Richtung der Ablaufeinrichtung strömen würde. Gleichzeitig wird die Fließgeschwindigkeit der Flüssigkeit in der Sedimentationsanlage verringert. Starke Verwirbelungen der Flüssigkeit können vermieden und eine Strömung mit einem größeren laminaren Anteil kann erzeugt werden.

Diese Effekte werden mit der erfindungsgemäßen Ausgestaltung des Zulaufmoduls erzielt, ohne dass die Länge der Sedimentationsanlage zwischen dem Zulauf und dem Ablauf verändert würde. Der Umlaufraum verlängert die Rohrstrecke ausgehend vom Zulaufstutzen vielmehr beispielsweise in der dem Ablaufstutzen entgegengesetzten Richtung. Die Erstreckungsrichtung des Umlaufraums braucht dabei nicht unbedingt mit der Erstreckungsrichtung der Rohrstrecke zusammenzufallen.

Optionale Merkmale des erfindungsgemäßen Zulaufmoduls sind in den zugehörigen abhängigen Patentansprüchen wiedergegeben.

Wenn die Versatzlänge in axialer Richtung des Rohrstücks von einer Mittelachse der Zulaufeinrichtung bis zum verschließbaren axialen Ende des Rohrstücks des Zulaufmoduls bestimmt ist, ist sie vorzugsweise zumindest gleich einem Innendurchmesser des Rohrstücks des Zulaufmoduls. Mit einer Versatzlänge in dieser Größenordnung wird bereits eine spürbare Verbesserung der Reinigungsleistung bei ansonsten gleichbleibenden Abmaßen der Sedimentationsanlage erzielt.

Die Reinigungsleistung wird noch besser, wenn die so bestimmte Versatzlänge zumindest gleich dem 1,5-fachen, besser noch zumindest gleich dem 1,75-fachen Innendurchmesser des Rohrstücks des Zulaufmoduls ist.

Nach oben hin gibt es prinzipiell keine Begrenzung der Versatzlänge. Damit das Zulaufmodul nicht zu unhandlich wird, ist die wie oben bestimmte Versatzlänge vorzugsweise aber höchstens gleich dem 2,5-fachen, besser noch höchstens gleich dem 2,25-fachen, und noch besser höchstens gleich dem 2-fachen Innendurchmesser des Rohrstücks des Zulaufmoduls.

Der Zulaufstutzen kann eine Längsachse haben, die im wesentlichen rechtwinklig zu einer Längsachse des Rohrstücks des Zulaufmoduls verläuft.

Das in das Innere des Rohrstücks hineinragende Ende des Zulaufstutzens ist vorzugsweise unter einem Winkel gegenüber der Längsachse des Zulaufstutzens angeschrägt, welcher zwischen 5 und 35 Grad, weiter bevorzugt etwa 20 Grad beträgt.

Das in das Innere des Rohrstücks hineinragende Ende des Zulaufstutzens kann in seinem dem verschließbaren Ende des Rohrstücks abgewandten Bereich mit einem unter einem Winkel angebrachten Fortsatz versehen sein, welcher Winkel vorzugsweise zwischen 15 und 55 Grad, weiter bevorzugt etwa 40 Grad zur Längsachse des Zulaufstutzens (die im Einbauzustand im Wesentlichen vertikal verlaufen kann) beträgt.

Durch die angeschrägte und ggf. mit dem winklig angebrachten Fortsatz versehene Ausgestaltung des Mündungsendes des Zulaufstutzens ist die Zulauföffnung dem verschlossenen Ende des Zulaufstutzens sowie dem Boden des Rohrstücks des Zulaufmoduls zugewandt. So prallt nicht das gesamte Regenwasser, das über den Zulaufstutzen in den Absetzraum eingeleitet wird, unmittelbar vertikal auf den Boden des Rohrstücks. Vielmehr wird dem Regenwasser eine schräg abwärts gerichtete Bewegung aufgegeben. Insofern wird bereits unabhängig vom Vorhandensein des Umlaufraums ein vorteilhafter Effekt erzielt. Die Anschrägung und ggf. der Fortsatz ergänzen den erfindungsgemäßen Umlaufraum insofern vorteilhaft, als der Umlaufraum dem Regenwasser den notwendigen Raum bietet, um in der durch die Anschrägung und ggf. den Fortsatz bereits vorgegebenen Richtung zu strömen und anschließend umgelenkt zu werden.

Die oben genannte Aufgabe wird zum Anderen mit einer Sedimentationsanlage gemäß Patentanspruch 8 gelöst.

Diese Sedimentationsanlage hat eine durch zumindest ein Rohrstück gebildeten Rohrstrecke; eine Zulaufeinrichtung, durch welche eine Flüssigkeit in die Rohrstrecke einleitbar ist; und eine Ablaufeinrichtung, über die die Flüssigkeit aus der Rohrstrecke ableitbar ist. Die Rohrstrecke weist in der axialen Richtung ein erstes und ein zweites Ende auf, wobei das erste Ende der Rohrstrecke von der Zulaufeinrichtung in der axialen und der Ablaufeinrichtung entgegengesetzten Richtung um eine Versatzlänge beabstandet ist. Das erste axiale Ende schließt die Sedimentationsanlage im verlegten Zustand in axialer Richtung ab. Ähnlich wie schon im Falle des erfindungsgemäßen Zulaufmoduls ist die Versatzlänge derart bemessen, dass zwischen der Zulaufeinrichtung und dem verschließbaren axialen Ende der Rohrstrecke ein Umlaufraum gebildet ist, in dem die durch die Zulaufeinrichtung in das Zulaufmodul eingeleitete Flüssigkeit umlaufen kann, bevor sie in Richtung der Ablaufeinrichtung weitergeleitet wird.

Die Sedimentationsanlage kann modular aufgebaut sein und weist dann zumindest ein Zulaufmodul, zumindest ein Ablaufmodul und optional zumindest ein Streckenmodul zwischen Zulaufmodul und Ablaufmodul auf, wobei die Zulaufeinrichtung Teil des Zulaufmoduls und die Ablaufeinrichtung Teil des Ablaufmoduls ist. Eine modulare Bauweise hat den Vorteil, dass die Anlage individuellen Bedürfnissen gut angepasst werden kann. Außerdem können einzelne Module leicht transportiert und verlegt werden. Die Erfindung umfasst jedoch auch einstückig ausgestaltete Sedimentationsanlagen.

Im übrigen können an der erfindungsgemäßen Sedimentationsanlage die gleichen vorteilhaften Weiterbildungen vorgenommen werden wie an dem erfindungsgemäßen Zulaufmodul. Entsprechende Merkmale sind in den zugehörigen abhängigen Patentansprüchen beschrieben.

### Kurze Beschreibung der Zeichnungen

Figur 1 zeigt ein erfindungsgemäßes Zulaufmodul für eine Sedimentationsanlage im Längsschnitt.
Figur 2 zeigt eine erfindungsgemäße Sedimentationsanlage mit dem Zulaufmodul aus Figur 1 im Längsschnitt.
Figur 3 zeigt zu Vergleichszwecken eine Sedimentationsanlage ohne Umlaufraum im Längsschnitt.

### Ausführliche Beschreibung eines Ausführungsbeispiels der Erfindung

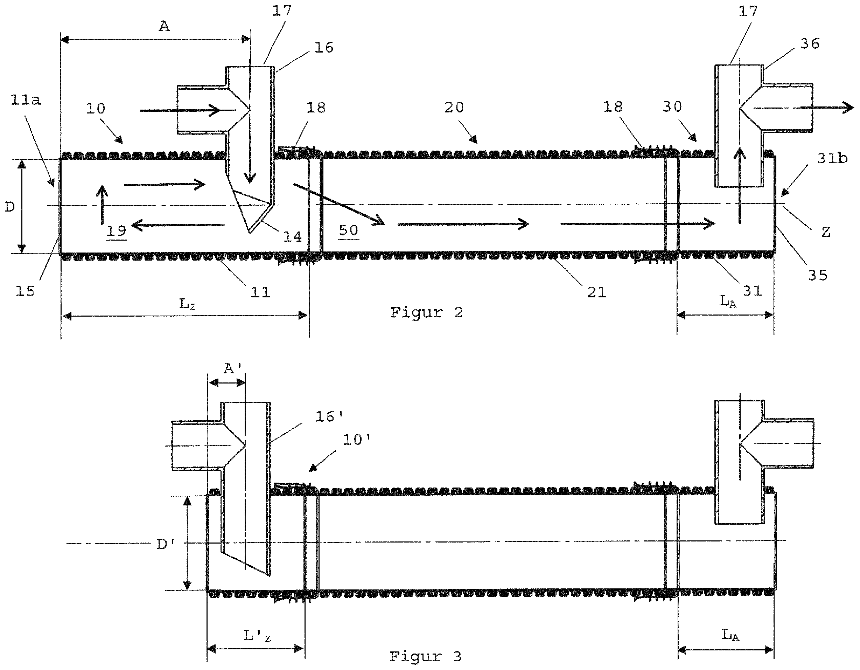

Die Figur 2 zeigt eine Ausführungsform einer erfindungsgemäßen Sedimentationsanlage.

Die Sedimentationsanlage ist in dem hier dargestellten Ausführungsbeispiel der Erfindung modular aufgebaut, so dass sie individuellen Bedürfnissen gut angepasst werden kann. Außerdem können einzelne Module leicht transportiert und verlegt werden.

Die Anlage umfasst insbesondere ein Zulaufmodul 10, ein Streckenmodul 20 und ein Ablaufmodul 30. Die Module 10, 20, 30 sind mittels Muffen 18 miteinander verbunden. Abhängig von der gewünschten Länge der Sedimentationsanlage können Module, insbesondere Streckenmodule 20 mit unterschiedlichen Längen eingesetzt werden, und es können auch mehrerer Streckenmodule 20 zwischen Einlaufmodul 10 und Auslaufmodul 30 vorgesehen sein. Dann können auch die verschiedenen Streckenmodule 20 über Muffen miteinander gekoppelt sein. Wenn eine besonders kurze Baulänge gewünscht ist, können die Streckenmodule 20 entfallen und kann das Ablaufmodul 30 direkt mit dem Zulaufmodul 10 gekoppelt werden. Abhängig von der Anzahl und Länge der verwendeten Streckenmodule 20 variiert die Gesamtlänge der Sedimentationsanlage, wobei die Gesamtlänge oft zwischen drei und zwölf Metern betragen wird (entsprechend den im Stand der Technik gängigen Baulängen von beispielsweise drei, sechs oder neun Metern).

Das Zulaufmodul 10 umfasst ein Rohrstück 11, das in der vorliegenden Ausführungsform im Wesentlichen zylinderförmig ausgestaltet ist, und eine Zulaufeinrichtung, die hier in Form eines Zulaufstutzens 16 vorgesehen ist. Das Rohrstück 10 hat in axialer Richtung ein erstes, verschließbares Ende 11a, das von der Zulaufeinrichtung 16 in axialer Richtung um eine Versatzlänge A beabstandet ist, und ein zweites, offenes Ende 11b, das zum Anschluss an ein weiteres Modul - hier ein Streckenmodul 20 - der Sedimentationsanlange ausgestaltet ist.

Das Streckenmodul 20 umfasst ein Rohrstück 21, dessen Rohrquerschnitt im wesentlichen dem des Rohrstücks 11 des Zulaufmoduls 10 entspricht, so dass die Rohrstücke 11, 21 gekoppelt werden können.

Das Ablaufmodul 30 umfasst ein ebenfalls mit einem passenden Querschnitt ausgestaltetes Rohrstück 31 sowie eine Ablaufeinrichtung, hier einen Ablaufstutzen 36, durch welche die Flüssigkeit wieder aus dem Ablaufmodul 30 ausleitbar ist.

Die Rohrstücke 11, 21, 31 der einzelnen Module bilden zusammen eine Rohrstrecke der Sedimentationsanlage. Innerhalb der Rohrstrecke ist ein Absetzraum 50 definiert. Bei bestimmungsgemäßem Einbau der Sedimentationsanlage verläuft der Boden der Rohrstrecke und somit des Absetzraums 50 im Wesentlichen horizontal und vorzugsweise parallel zum Erdboden. Durch die Zulaufeinrichtung, hier den Zulaufstutzen 16, kann eine Flüssigkeit - im konkreten Anwendungsfall beispielsweise Regenwasser - in den Absetzraum 50 eingeleitet werden.

Die gegenüberliegenden axialen Enden der Rohrstrecke, d.h. im vorliegenden Fall das äußere axiale Ende 11a des Zulaufmoduls 10 und das äußere axiale Ende 31b des Ablaufmoduls 30, sind mittels Endplatten 15 verschlossen.

Die Rohrstücke 11, 21, 31, die die Rohrstrecke bilden, sind hier z.B. Wellrohrstücke mit einem im wesentlichen kreisrunden Querschnitt und einem Innendurchmesser D. Alternativ kann die Rohrstrecke auch andere Querschnittsformen aufweisen. Die Rohrstrecke kann aus beliebigen Materialien hergestellt sein. Insbesondere eignen sich Kunststoffe, vorzugsweise Polyolefine wie Polypropylen (PP) oder Polyethylen (PE). Ein Wellrohr aus Kunststoff bietet die notwendige Festigkeit.

Der Zulaufstutzen 16 und der Ablaufstutzen 36 durchdringen die Wand des Rohrstücks 11 bzw. 31 des Zulaufmoduls 10 bzw. des Ablaufmoduls 30 und haben jeweils eine Längsachse, die im wesentlichen im rechten Winkel zur Mittelachse Z der Rohrstrecke verläuft. Für den Zulaufstutzen 16 und den Ablaufstutzen 36 können beispielsweise Kunststoffrohre oder Dornschächte verwendet werden, deren Durchmesser geeignet an den Innendurchmesser der Rohrstrecke angepasst ist. Bei einem Innendurchmesser der Rohrstrecke von etwa 1000 mm könnten die Stutzen 16, 36 geeignet einen Außendurchmesser von etwa 400 mm haben. Die Stutzen 16, 36 sind vorzugsweise stoffschlüssig, z.B. durch Verschweißen, fest und fluiddicht mit den Rohrstücken der Module 10 bzw. 30 verbunden. Dazu sind die Stutzen 16, 36 vorzugsweise aus identischem Material wie die Rohrstücke 11, 21, 31 gefertigt. Ein nach außerhalb des Rohrstücks 11, 31 hervorstehendes Ende jedes Stutzens 16, 36 ist im Einbauzustand mit einer hier nur schematisch angedeuteten Schachtabdeckung 17 verschlossen.

Vorzugsweise ist der Ablaufstutzen 36 als Tauchrohr ausgestaltet. So wird die Rückhaltung von Schwimm- und Schwebstoffen möglich, und im Havariefall können Öle und dergleichen zurückgehalten werden.

Die Sedimentationsanlage wird in an sich bekannter Art und Weise unterirdisch verlegt, so dass die Längsachse Z des Absetzraums 50 im Wesentlichen horizontal verläuft und die Längsachsen der Zulauf- bzw. Ablaufstutzen 16, 36 vertikal und parallel zueinander angeordnet sind. Die Schnittansicht in Fig. 2 schneidet die Längsachsen von Zulauf- und Ablaufstutzen 16, 36 und die Längsachse Z der Rohrstrecke bzw. des Absetzraums 50.

Um die Sedimentationsanlage an vor- und/oder nachgeschaltete Anlagen (nicht gezeigt) anzuschließen, wird die Zulaufeinrichtung bzw. die Ablaufeinrichtung auf die jeweiligen Anschlüsse ausgerichtet. Über entsprechende Rohrverbindungen wird die Zulaufeinrichtung mit einem Anschluss einer vorgeschalteten Anlage (z.B. Regenwasserablauf), und die Ablaufeinrichtung mit einem Anschluss einer nachgeschalteten Anlage (z.B. Versickerungsanlage) dauerhaft und fluiddicht verbunden.

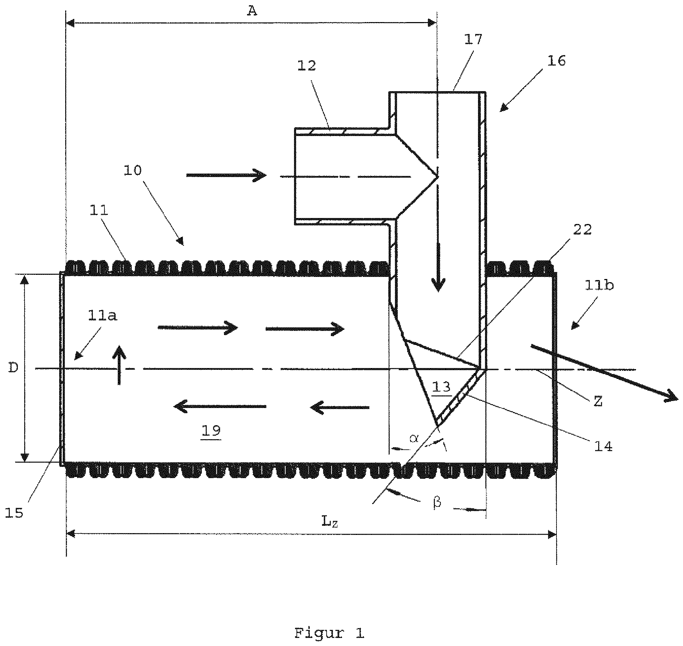

Während das Streckenmodul 20 und das Ablaufmodul 30 der erfindungsgemäßen Sedimentationsanlage in an sich bekannter Art und Weise ausgebildet sind, ist das Zulaufmodul 10 der Sedimentationsanlage neuartig ausgestaltet. Dies wird im folgenden im Detail beschrieben. Das Zulaufmodul 10 ist dazu in Figur 1 noch einmal im Detail dargestellt, wobei die Schnittebene in Figur 1 dieselbe ist wie in Figur 2.

In dem hier dargestellten Zulaufmodul ragt ein Ende des Zulaufstutzens 16 in das Innere des Absetzraums 50 hinein. Das durch den Zulaufstutzen 16 einströmende Regenwasser fließt weiter in einem Umlaufraum 19, der in dem erfindungsgemäßen Zulaufmodul 10 im Bereich zwischen dem Zulaufstutzen 16 und dem verschlossenen Ende 11a des Rohrstücks 11 ausgebildet ist. Der Umlaufraum 19 ist dadurch gebildet, dass eine Versatzlänge A, um die das erste, verschließbare Ende 11a des Rohrstücks von der Zulaufeinrichtung 16 in axialer Richtung beabstandet ist, entsprechend bemessen ist.

Am verschlossenen Ende 11a des Rohrstücks 11 wird das Regenwasser umgelenkt und strömt erst dann in der entgegengesetzten Richtung, d.h. in Richtung des Ablaufmoduls 30 mit dem Ablaufstutzen 36. Durch diese der eigentlichen Strömungsrichtung innerhalb der Rohrstrecke zunächst entgegenlaufende, umlaufende Bewegung des Regenwassers innerhalb des Umlaufraums 19 im Zulaufmodul 10 verlängert sich der Fließweg und somit die Durchlaufzeit des Regenwassers verglichen mit einem Fall, in dem das Regenwasser direkt von der Zulauföffnung 13 des Zulaufstutzens 16 in Richtung des Ablaufmoduls 30 geleitet würde. Gleichzeitig wird die Fließgeschwindigkeit des Regenwassers verringert. Starke Verwirbelungen des Regenwassers können vermieden und eine Strömung mit einem größeren laminaren Anteil kann erzeugt werden. Diese Effekte werden mit der erfindungsgemäßen Ausgestaltung des Zulaufmoduls erzielt, ohne dass die Länge der Rohrstrecke zwischen dem Zulauf und dem Ablauf verändert würde. Der Umlaufraum 19 verlängert die Rohrstrecke in dieser Ausgestaltung ausgehend vom Zulaufstutzen 16 vielmehr in der dem Ablaufstutzen 36 entgegengesetzten Richtung, wobei eine Mittelachse des Umlaufraums 19 hier mit der Mittelachse Z der Rohrstrecke zusammenfällt.

Gemessen zwischen der Längsachse des Zulaufstutzens 16 und dem verschließbaren Ende 11a des Zulaufmoduls 10 ist die Versatzlänge A bevorzugt zumindest so groß wie der Innendurchmesser des Rohrstücks 11.

Eine weitere Verbesserung der Reinigungsleistung ergibt sich, wenn die Versatzlänge A zumindest gleich dem anderthalbfachen Durchmesser des Rohrstücks 11 ist.

Um das Zulaufmodul 10 dabei nicht übermäßig sperrig auszugestalten, kann die Versatzlänge A kleiner als der zweieinhalbfache Innendurchmesser des Rohrstücks 11 gewählt werden.

Wenn das Rohrstück 11 beispielsweise einen Innendurchmesser von 800 mm hat, sollte die Versatzlänge A daher mindestens 800 mm, besser noch mindestens 1200 mm, aber höchstens 2000 mm betragen. In einer beispielhaften, bevorzugten Ausgestaltung beträgt die Versatzlänge A etwa 1500 mm bei einem Innendurchmesser des Rohrstücks 11 von etwa 800 mm.

Wenn das Rohrstück 11 einen Innendurchmesser von 1000 mm hat, sollte die Versatzlänge A mindestens 1000 mm, besser noch mindestens 1500 mm, aber höchstens 2500 mm betragen.

In der dargestellten Ausführungsform des Zulaufmoduls 10 ist außerdem das in den Absetzraum 50 hineinragende Ende des Zulaufstutzens 16 auf neuartige Art und Weise ausgestaltet.

Zum Einen ist das in den Absetzraum 50 hineinragende Ende des Zulaufstutzens 16 unter einem Winkel α gegenüber der Längsachse des Zulaufstutzens angeschrägt. Dadurch weist eine Zulauföffnung 13, durch welche das Regenwasser in den Absetzraum 50 eintritt, einen ovalen Umriss auf. Die Anschrägung ist so ausgeführt, dass sich der Zulaufstutzen 16 zum Umlaufraum 19 hin öffnet. Der Winkel α beträgt vorzugsweise zwischen 5 und 35 Grad, in der vorliegenden Ausführungsform etwa 20°.

Zum anderen ist das in den Absetzraum 50 hineinragende Ende des Zulaufstutzens 16 an der der Endplatte 15 abgewandten, d.h. dem Streckenmodul 20 zugewandten Seite mit einem bogenförmigen Fortsatz 14 versehen, der seinerseits am Ende des Zulaufstutzens 16 angebracht ist. In der vorliegenden Ausführungsform ist der Fortsatz 14 als Segmentbogen ausgestaltet und am Ende des Zulaufstutzens angeschweißt 16. Das Bezugszeichen 22 bezeichnet die zugehörige Schweißnaht. Der Fortsatz 14 kann aber auch auf andere Art und Weise am Ende des Zulaufstutzens 16 angebracht oder auch integral mit dem Zulaufstutzen 16 ausgebildet werden. Der Segmentbogen selbst ist aus einzelnen plattenförmigen Segmenten zusammengesetzt, beispielsweise zusammengeschweißt.

Der Fortsatz 14 ist so ausgestaltet und am Ende des Zulaufstutzens angebracht, dass er einen Winkel β zur Längsachse des Zulaufstutzens 16 bildet, die hier vertikal verläuft. In der Schnittansicht gemäß Figur 1 beträgt der Winkel β vorzugsweise zwischen 15 und 55 Grad, in der vorliegenden Ausführungsform etwa 40° zur Längsachse des Zulaufstutzens 16 und somit auch zur Vertikalen.

Durch diese einerseits angeschrägte und andererseits mit dem winklig angebrachten Fortsatz 14 versehene Ausgestaltung des Mündungsendes des Zulaufstutzens 16 ist die Zulauföffnung 13 dem linken, verschlossenen Ende 11a sowie dem Boden des Rohrstücks des Zulaufmoduls 10 zugewandt. Anders als bei Zulaufstutzen 16 ohne eine solche Ausgestaltung prallt nicht das gesamte Regenwasser, das über den Zulaufstutzen 16 in den Absetzraum 50 eingeleitet wird, unmittelbar auf den Boden der Rohrstrecke. Vielmehr wird dem Regenwasser eine schräg abwärts gerichtete Bewegung aufgegeben. Insofern wird durch die Anschrägung und/oder den Fortsatz 14 am unteren Ende des Zulaufstutzens 16 bereits unabhängig vom Vorhandensein des Umlaufraums 19 ein vorteilhafter Effekt erzielt. Die Anschrägung und der Fortsatz ergänzen die Funktion des Umlaufraums 19 vorteilhaft insofern, als der Umlaufraum 19 dem Regenwasser genug Raum bietet, um in der durch den Fortsatz 14 und/oder die Anschrägung bereits vorgegebenen Richtung zu strömen und anschließend umgelenkt zu werden.

Nun wird die Arbeitsweise der erfindungsgemäßen Sedimentationsanlage beschrieben.

Im normalen Betrieb befindet sich die Sedimentationsanlage im Dauerstau, und der Absetzraum 50 ist vollständig gefüllt. Durch die Zulaufeinrichtung wird eine Flüssigkeit, z.B. Regenwasser aus dem Dachablauf eines Wohnhauses, in die Sedimentationsanlage eingeleitet. Das Regenwasser tritt über die Zulauföffnung 13 am Mündungsende des Zulaufstutzens 16 in das Innere des Absetzraums 50 ein. Durch die oben beschriebene Ausgestaltung des Mündungsendes des Zulaufstutzens 16 mit dem Fortsatz 14 wird der in den Absetzraum 50 eintretende Flüssigkeitsstrom in eine umlaufende Bewegung durch den Umlaufraum 19 im Zulaufmodul 10 versetzt. Während dieser Umlaufbewegung werden bereits grobe, im Regenwasser enthaltene Stoffe abgesetzt. Das Regenwasser strömt dann weiter durch das Streckenmodul 20 zum Ablaufmodul 30, wo es in an sich bekannter Art und Weise aus der Sedimentationsanlage heraus- und z.B. in eine Versicherungsanlage hineingeleitet wird.

Figur 3 zeigt ein Vergleichsbeispiel einer Sedimentationsanlage, die in etwa mit der aus der oben diskutierten DE 20 2005 014 237 U1 bekannten übereinstimmt. Das Zulaufmodul 10' dieser Sedimentationsanlage verfügt nicht über einen erfindungsgemäßen Umlaufraum, denn die Versatzlänge A' des Rohrstücks des Zulaufmoduls 10 (gemessen von der Längsachse des Zulaufstutzens 16' bis zu dem verschlossenen Ende des Rohrstücks des Zulaufmoduls 10') ist zu kurz, um einen solchen Umlaufraum zu bilden. Dadurch ist auch die Gesamtlänge L'_{z} des Zulaufmoduls 10' deutlich kürzer als die Gesamtlänge L_{z} des erfindungsgemäßen Zulaufmoduls 10.

Aufgrund des durch den Umlaufraum 19 verlängerten Fließwegs bietet die erfindungsgemäße Sedimentationsanlage eine verbesserte Reinigungsleistung als eine Sedimentationsanlage mit gleichem Innendurchmesser, aber ohne Umlaufraum. Anders herum betrachtet erbringt die erfindungsgemäße Sedimentationsanlage mit dem Umlaufraum bereits mit einem kleineren Innendurchmesser D dieselbe Reinigungsleistung wie eine Sedimentationsanlage ohne Umlaufraum. In einem konkreten Beispiel erbrachte eine erfindungsgemäße Sedimentationsanlage mit Umlaufraum bereits mit einem Innendurchmesser D von 800 mm eine Reinigungsleistung, die eine Sedimentationsanlage ohne Umlaufraum erst mit einem Innendurchmesser D' von 1000 mmm lieferte. Die erfindungsgemäße Sedimentationsanlage kann somit entweder bei gleicher Leistung kompakter ausgestaltet werden, oder erbringt bei gleicher Ausgestaltung eine bessere Reinigungsleistung.

Die obige Beschreibung der bevorzugten Ausführungsform des Zulaufmoduls 10 dient der Veranschaulichung der Erfindung, soll den Bereich der Erfindung aber nicht beschränken.
Dies gilt auch und vor allem für die Tatsache, dass die im Zusammenhang mit der bevorzugten Ausführungsform des Zulaufmoduls 10 diskutierten Vorteile nicht nur mit einer in Modulbauweise ausgestalteten Sedimentationsanlage erzielt werden können, sondern auch mit einer einstückig ausgestalteten Anlage, die im Bereich ihres Zulaufs einen Umlaufraum der oben beschriebenen Art aufweist.

## Patentansprüche

1. Zulaufmodul (10) für eine Sedimentationsanlage,
welches Zulaufmodul ein Rohrstück (11) und zumindest eine Zulaufeinrichtung umfasst, durch welche eine Flüssigkeit in das Rohrstück (11) einleitbar ist,
wobei das Rohrstück (11) in axialer Richtung ein erstes, verschließbares Ende (11a) hat, das von der Zulaufeinrichtung in axialer Richtung um eine Versatzlänge (A) beabstandet ist, und ein zweites, offenes Ende (11b), das zum Anschluss an ein weiteres Modul (20, 30) der Sedimentationsanlange ausgestaltet ist,
**dadurch gekennzeichnet, dass**
die Versatzlänge (A) derart bemessen ist, dass zwischen der Zulaufeinrichtung und dem verschließbaren axialen Ende (11a) des Rohrstücks (11) ein Umlaufraum (19) gebildet ist, in dem die durch die Zulaufeinrichtung in das Zulaufmodul (10) eingeleitete Flüssigkeit umlaufen kann, bevor sie in Richtung des offenen Endes (11b) des Rohrstücks (11) des Zulaufmoduls (10) weitergeleitet wird,
wobei die Zulaufeinrichtung einen Zulaufstutzen (16) aufweist, der in das Innere des Rohrstücks (11) des Zulaufmoduls (10) hineinragt, wobei das in das Innere des Rohrstücks (11) hineinragende Ende des Zulaufstutzens (16) unter einem Winkel (α) gegenüber der Längsachse des Zulaufstutzens (16) angeschrägt ist, so dass sich der Zulaufstutzen zum Umlaufraum (19) hin öffnet.

2. Zulaufmodul (10) nach Patentanspruch 1, bei welchem die Versatzlänge (A) in axialer Richtung des Rohrstücks (11) von einer Mittelachse der Zulaufeinrichtung bis zum verschließbaren axialen Ende (11a) des Rohrstücks (11) des Zulaufmoduls (10) bestimmt ist und zumindest gleich einem Innendurchmesser (D) des Rohrstücks (11) des Zulaufmoduls (10) ist.

3. Zulaufmodul (10) nach Patentanspruch 2, bei welchem die so bestimmte Versatzlänge (A) zumindest gleich dem 1,5-fachen, besser noch zumindest gleich dem 1,75-fachen Innendurchmesser (D) des Rohrstücks (11) des Zulaufmoduls (10) ist.

4. Zulaufmodul (10) nach Patentanspruch 2 oder 3, bei welchem die so bestimmte Versatzlänge (A) aber höchstens gleich dem 2,5-fachen, besser noch höchstens gleich dem 2,25-fachen, und noch besser höchstens gleich dem 2-fachen Innendurchmesser (D) des Rohrstücks (11) des Zulaufmoduls (10) ist.

5. Zulaufmodul (10) nach Patentanspruch 1, bei welchem der Zulaufstutzen (16) eine Längsachse hat, die im wesentlichen rechtwinklig zu einer Längsachse (Z) des Rohrstücks (11) des Zulaufmoduls (10) verläuft.

6. Zulaufmodul (10) nach Patentanspruch 1, bei welchem der Winkel (α) zwischen 5 und 35 Grad, weiter bevorzugt etwa 20 Grad beträgt.

7. Zulaufmodul (10) nach Patentanspruch 1 oder 6, bei welchem das in das Innere des Rohrstücks (11) hineinragende Ende des Zulaufstutzens (16) in seinem dem verschließbaren Ende (11a) des Rohrstücks (11) abgewandten Bereich mit einem unter einem Winkel (β) angebrachten Fortsatz (14) versehen ist, welcher Winkel (β) vorzugsweise zwischen 15 und 55 Grad, weiter bevorzugt etwa 40 Grad zur Längsachse des Zulaufstutzens (16) beträgt.

8. Sedimentationsanlage mit einem Zulaufmodul (10) nach einem der vorhergehenden Ansprüche, wobei das Zulaufmodul (10) ausgebildet ist, mit:
einer durch zumindest ein Rohrstück (11, 21, 31) gebildeten Rohrstrecke,
einer Zulaufeinrichtung, durch welche eine Flüssigkeit in die Rohrstrecke einleitbar ist, und
einer Ablaufeinrichtung (36), über die die Flüssigkeit aus der Rohrstrecke ableitbar ist,
wobei die Rohrstrecke in der axialen Richtung ein erstes (11a) und ein zweites Ende (31b) aufweist, und
wobei das erste Ende (11a) der Rohrstrecke von der Zulaufeinrichtung in der axialen und der Ablaufeinrichtung (36) entgegengesetzten Richtung um eine Versatzlänge (A) beabstandet ist,
**dadurch gekennzeichnet, dass**
die Versatzlänge (A) derart bemessen ist, dass zwischen der Zulaufeinrichtung und dem verschließbaren axialen Ende (11a) der Rohrstrecke ein Umlaufraum (19) gebildet ist, in dem die durch die Zulaufeinrichtung in das Zulaufmodul (10) eingeleitete Flüssigkeit umlaufen kann, bevor sie in Richtung der Ablaufeinrichtung (36) weitergeleitet wird,
wobei die Zulaufeinrichtung einen Zulaufstutzen (16) aufweist, der in das Innere des Rohrstücks (11) des Zulaufmoduls (10) hineinragt, wobei das in das Innere des Rohrstücks (11) hineinragende Ende des Zulaufstutzens (16) unter einem Winkel (α) gegenüber der Längsachse des Zulaufstutzens (16) angeschrägt ist, so dass sich der Zulaufstutzen zum Umlaufraum (19) hin öffnet.

9. Sedimentationsanlage nach Patentanspruch 8, bei welcher die Versatzlänge (A) in axialer Richtung der Rohrstrecke von einer Mittelachse der Zulaufeinrichtung bis zum ersten axialen Ende (11a) der Rohrstrecke bestimmt ist und zumindest gleich einem Innendurchmesser (D) der Rohrstrecke ist.

10. Sedimentationsanlage nach Patentanspruch 9, bei welcher die so bestimmte Versatzlänge (A) zumindest gleich dem 1,5-fachen, besser noch zumindest gleich dem 1,75-fachen Innendurchmesser (D) der Rohrstrecke ist.

11. Sedimentationsanlage nach Patentanspruch 9 oder 10, bei welcher die so bestimmte Versatzlänge (A) aber höchstens gleich dem 2,5-fachen, besser noch höchstens gleich dem 2,25-fachen, und noch besser höchstens gleich dem 2-fachen Innendurchmesser (D) der Rohrstrecke ist.

12. Sedimentationsanlage nach Patentanspruch 8, bei welcher der Zulaufstutzen (16) eine Längsachse hat, die im wesentlichen rechtwinklig zu einer Längsachse (Z) der Rohrstrecke verläuft.

13. Sedimentationsanlage nach Patentanspruch 8, bei welcher der Winkel (α) zwischen 5 und 35 Grad, weiter bevorzugt etwa 20 Grad beträgt.

14. Sedimentationsanlage nach Patentanspruch 8 oder 13, bei welcher das in das Innere der Rohrstrecke hineinragende Ende des Zulaufstutzens (16) in seinem dem ersten Ende (11a) der Rohrstrecke abgewandten Bereich mit einem unter einem Winkel (β) angebrachten Fortsatz (14) versehen ist, welcher Winkel (β) vorzugsweise zwischen 15 und 55 Grad, weiter bevorzugt etwa 40 Grad zur Längsachse des Zulaufstutzens (16) beträgt.

15. Sedimentationsanlage nach Patentanspruch 8, die modular aufgebaut ist und zumindest ein Zulaufmodul (10), zumindest ein Ablaufmodul (30) und optional zumindest ein Streckenmodul (20) zwischen Zulaufmodul (10) und Ablaufmodul (30) aufweist, wobei die Zulaufeinrichtung (16) Teil des Zulaufmoduls (10) und die Ablaufeinrichtung (36) Teil des Ablaufmoduls (30) ist.

## Claims

1. Intake module (10) for a sedimentation installation, which intake module comprises a pipe piece (11) and at least one intake device, through which a fluid can be introduced into the pipe piece (11),
wherein the pipe piece (11) has in an axial direction a first closable end (11a), which is spaced apart from the intake device in an axial direction by an offset length (A), and a second open end (11b) which is constructed for connection to another module (20, 30) of the sedimentation installation,
**characterised in that**
the offset length (A) is sized in such a manner that there is formed between the intake device and the closable axial end (11a) of the pipe piece (11) a circulation space (19) in which the fluid which is introduced through the intake device into the intake module (10) can circulate before it is directed in the direction of the open end (11b) of the pipe piece (11) of the intake module (10),
wherein the intake device has an intake nozzle (16) which protrudes into the inner side of the pipe piece (11) of the intake module (10), wherein the end of the intake nozzle (16) which protrudes into the inner side of the pipe piece (11) is chamfered at an angle (α) with respect to the longitudinal axis of the intake nozzle (16) so that the intake nozzle opens in the direction towards the circulation space (19).

2. Intake module (10) according to claim 1, wherein the offset length (A) in an axial direction of the pipe piece (11) is determined from a centre axis of the intake device as far as the closable axial end (11a) of the pipe piece (11) of the intake module (10) and is at least equal to an inner diameter (D) of the pipe piece (11) of the intake module (10).

3. Intake module (10) according to claim 2, wherein the offset length (A) determined in this manner is at least equal to 1.5 times, even better at least equal to 1.75 times, the inner diameter (D) of the pipe piece (11) of the intake module (10).

4. Intake module (10) according to claim 2 or 3, wherein the offset length (A) determined in this manner is, however, at a maximum equal to 2.5 times, even better at a maximum equal to 2.25 times and even better at a maximum equal to 2 times, the inner diameter (D) of the pipe piece (11) of the intake module (10).

5. Intake module (10) according to claim 1, wherein the intake nozzle (16) has a longitudinal axis which extends substantially at right-angles with respect to a longitudinal axis (Z) of the pipe piece (11) of the intake module (10).

6. Intake module (10) according to claim 1, wherein the angle (α) is between 5 and 35 degrees, more preferably approximately 20 degrees.

7. Intake module (10) according to claim 1 or 6, wherein the end of the intake nozzle (16) which protrudes into the inner side of the pipe piece (11) is provided in the region facing away from the closable end (11a) of the pipe piece (11) with a continuation (14) which is fitted at an angle (β), which angle (β) is preferably between 15 and 55 degrees, more preferably approximately 40 degrees, with respect to the longitudinal axis of the intake nozzle (16).

8. Sedimentation installation having an intake module (10) according to any one of the preceding claims, wherein the intake module (10) is constructed with:
a pipe section which is formed by means of at least one pipe piece (11, 21, 31),
an intake device, through which a fluid can be introduced into the pipe section, and
an outlet device (36) via which the fluid can be directed from the pipe section,
wherein the pipe section has in the axial direction a first end (11a) and a second end (31b), and
wherein the first end (11a) of the pipe section is spaced apart from the intake device in the axial direction counter to the outlet device (36) by an offset length (A),
**characterised in that**
the offset length (A) is sized in such a manner that there is formed between the intake device and the closable axial end (11a) of the pipe section a circulation space (19) in which the fluid which is introduced through the intake device into the intake module (10) can circulate before it is directed in the direction of the outlet device (36),
wherein the intake device has an intake nozzle (16) which protrudes into the inner side of the pipe piece (11) of the intake module (10), wherein the end of the intake nozzle (16) which protrudes into the inner side of the pipe piece (11) is chamfered at an angle (α) with respect to the longitudinal axis of the intake nozzle (16) so that the intake nozzle opens in the direction towards the circulation space (19).

9. Sedimentation installation according to claim 8, wherein the offset length (A) is determined in an axial direction of the pipe section from a centre axis of the intake device as far as the first axial end (11a) of the pipe section and is at least equal to an inner diameter (D) of the pipe section.

10. Sedimentation installation according to claim 9, wherein the offset length (A) determined in this manner is at least equal to 1.5 times, even better at least equal to 1.75 times, the inner diameter (D) of the pipe section.

11. Sedimentation installation according to claim 9 or 10, wherein the offset length (A) determined in this manner is, however, at a maximum equal to 2.5 times, even better at a maximum equal to 2.25 times and even better at a maximum equal to 2 times, the inner diameter (D) of the pipe section.

12. Sedimentation installation according to claim 8, wherein the intake nozzle (16) has a longitudinal axis which extends substantially at right-angles with respect to a longitudinal axis (Z) of the pipe section.

13. Sedimentation installation according to claim 8, wherein the angle (α) is between 5 and 35 degrees, more preferably approximately 20 degrees.

14. Sedimentation installation according to claim 8 or 13, wherein the end of the intake nozzle (16) which protrudes into the inner side of the pipe section is provided in the region thereof facing away from the first end (11a) of the pipe section with a continuation (14) which is fitted at an angle (β), which angle (β) is preferably between 15 and 55 degrees, more preferably approximately 40 degrees with respect to the longitudinal axis of the intake nozzle (16).

15. Sedimentation installation according to claim 8, which is constructed in a modular manner and has at least one intake module (10), at least one outlet module (30) and optionally at least one extension module (20) between the intake module (10) and outlet module (30), wherein the intake device (16) is part of the intake module (10) and the outlet device (36) is part of the outlet module (30).

## Revendications

1. Module d'alimentation (10) pour une installation de sédimentation,
lequel module d'alimentation comprend une pièce tubulaire (11) et au moins un dispositif d'alimentation, par lequel un liquide peut être introduit dans la pièce tubulaire (1),
dans lequel la pièce tubulaire (11) a, dans une direction axiale, une première extrémité pouvant être fermée (11a), qui est tenue à distance du dispositif d'alimentation dans une direction axiale d'une certaine longueur de décalage (A), et une seconde extrémité ouverte (11b), qui est configurée pour être raccordée à un module supplémentaire (20, 30) de l'installation de sédimentation,
**caractérisé en ce que**
la longueur de décalage (A) est dimensionnée de telle manière qu'un espace de circulation (19) est formé, entre le dispositif d'alimentation et l'extrémité axiale pouvant être fermée (11a) de la pièce tubulaire (11), dans lequel le liquide introduit dans le module d'alimentation (10) par le dispositif d'alimentation peut circuler, avant qu'il ne soit transféré en direction de l'extrémité ouverte (11b) de la pièce tubulaire (11) du module d'alimentation (10),
dans lequel le dispositif d'alimentation présente une tubulure d'alimentation (16), qui fait saillie à l'intérieur de la pièce tubulaire (11) du module d'alimentation (10), dans lequel l'extrémité faisant saillie à l'intérieur de la pièce tubulaire (11), de la tubulure d'alimentation (16) est chanfreinée selon un angle (α) par rapport à l'axe longitudinal de la tubulure d'alimentation (16), de sorte que la tubulure d'alimentation s'ouvre en direction de l'espace de circulation (19).

2. Module d'alimentation (10) selon la revendication 1, dans lequel la longueur de décalage (A) est définie dans une direction axiale de la pièce tubulaire (11) depuis un axe médian du dispositif d'alimentation jusqu'à l'extrémité axiale pouvant être fermée (11a) de la pièce tubulaire (11) du module d'alimentation (10) et est au moins égale à un diamètre intérieur (D) de la pièce tubulaire (11) du module d'alimentation (10).

3. Module d'alimentation (10) selon la revendication 2, dans lequel la longueur de décalage (A) ainsi définie est au moins égale à 1,5 fois, mieux encore au moins égale à 1,75 fois le diamètre intérieur (D) de la pièce tubulaire (11) du module d'alimentation (10).

4. Module d'alimentation (10) selon la revendication 2 ou 3, dans lequel la longueur de décalage (A) ainsi définie est toutefois au maximum égale à 2,5 fois, mieux encore au maximum égale à 2,25 fois, et encore mieux au maximum égale à 2 fois le diamètre intérieur (D) de la pièce tubulaire (11) du module d'alimentation (10).

5. Module d'alimentation (10) selon la revendication 1, dans lequel la tubulure d'alimentation (16) a un axe longitudinal, qui s'étend sensiblement à angle droit par rapport à un axe longitudinal (Z) de la pièce tubulaire (11) du module d'alimentation (10).

6. Module d'alimentation (10) selon la revendication 1, dans lequel l'angle (α) présente une valeur comprise entre 5 et 35 degrés, de manière davantage préférée une valeur d'environ 20 degrés.

7. Module d'alimentation (10) selon la revendication 1 ou 6, dans lequel l'extrémité faisant saillie à l'intérieur de la pièce tubulaire (11) de la tubulure d'alimentation (16) est pourvue, dans sa zone opposée à l'extrémité pouvant être fermée (11a) de la pièce tubulaire (11), d'un prolongement (14) installé selon un angle (β), lequel angle (β) présente de préférence une valeur comprise entre 15 et 55 degrés, de manière davantage préférée une valeur d'environ 40 degrés par rapport à l'axe longitudinal de la tubulure d'alimentation (16).

8. Installation de sédimentation avec un module d'alimentation (10) selon l'une quelconque des revendications précédentes, dans laquelle le module d'alimentation (10) est réalisé avec :
un tronçon de tube formé par au moins une pièce tubulaire (11, 21, 31),
un dispositif d'alimentation, par lequel un liquide peut être introduit dans le tronçon de tube, et
un dispositif d'évacuation (36), par l'intermédiaire duquel le liquide peut être évacué hors du tronçon de tube,
dans lequel le tronçon de tube présente dans la direction axiale une première (11a) et une seconde extrémité (31b), et
dans lequel la première extrémité (11a) du tronçon de tube est tenue à distance d'une longueur de décalage (A) du dispositif d'alimentation dans la direction axiale et opposée au dispositif d'évacuation (36),
**caractérisé en ce que**
la longueur de décalage (A) est dimensionnée de telle manière qu'un espace de circulation (19) est formé entre le dispositif d'alimentation et l'extrémité axiale pouvant être fermée (11a) du tronçon de tube, dans lequel le liquide introduit dans le module d'alimentation (10) par le dispositif d'alimentation peut circuler, avant qu'il ne soit transféré en direction du dispositif d'évacuation (36),
dans lequel le dispositif d'alimentation présente une tubulure d'alimentation (16), qui fait saillie à l'intérieur de la pièce tubulaire (11) du module d'alimentation (10), dans lequel l'extrémité faisant saillie à l'intérieur de la pièce tubulaire (11) de la tubulure d'alimentation (16) est chanfreinée selon un angle (α) par rapport à l'axe longitudinal de la tubulure d'alimentation (16), de sorte que la tubulure d'alimentation s'ouvre en direction de l'espace de circulation (19).

9. Installation de sédimentation selon la revendication 8, dans laquelle la longueur de décalage (A) est définie dans une direction axiale du tronçon de tube depuis un axe médian du dispositif d'alimentation jusqu'à la première extrémité axiale (11a) du tronçon de tube et est au moins égale à un diamètre intérieur (D) du tronçon de tube.

10. Installation de sédimentation selon la revendication 9, dans laquelle la longueur de décalage (A) ainsi définie est au moins égale à 1,5 fois, mieux encore au moins égale à 1,75 fois le diamètre intérieur (D) du tronçon de tube.

11. Installation de sédimentation selon la revendication 9 ou 10, dans laquelle la longueur de décalage (A) ainsi définie est toutefois au maximum égale à 2,5 fois, mieux encore au maximum égale à 2,25 fois, et encore mieux au maximum égale à 2 fois le diamètre intérieur (D) du tronçon de tube.

12. Installation de sédimentation selon la revendication 8, dans laquelle la tubulure d'alimentation (16) a un axe longitudinal, qui s'étend sensiblement à angle droit par rapport à un axe longitudinal (Z) du tronçon de tube.

13. Installation de sédimentation selon la revendication 8, dans laquelle l'angle (α) présente une valeur comprise entre 5 et 35 degrés, de manière davantage préférée une valeur d'environ 20 degrés.

14. Installation de sédimentation selon la revendication 8 ou 13, dans laquelle l'extrémité faisant saillie à l'intérieur du tronçon de tube de la tubulure d'alimentation (16) est pourvue, dans sa zone opposée à la première extrémité (11a) du tronçon de tube, d'un prolongement (14) installé selon un angle (β), lequel angle (β) présente de préférence une valeur comprise entre 15 et 55 degrés, de manière davantage préférée d'environ 40 degrés par rapport à l'axe longitudinal de la tubulure d'alimentation (16).

15. Installation de sédimentation selon la revendication 8, qui est élaborée de manière modulaire et présente au moins un module d'alimentation (10), au moins un module d'évacuation (30) et en option au moins un module de tronçon (20) entre le module d'alimentation (10) et le module d'évacuation (30), dans laquelle le dispositif d'alimentation (16) fait partie du module d'alimentation (10) et le dispositif d'évacuation (36) fait partie du module d'évacuation (30).
